# EUROPEAN PATENT APPLICATION

(11) **EP 4 772 757 A1**
(43) Date of publication of application: **08.07.2026**
(21) Application number: 26150167.0
(22) Date of filing: 05.01.2026
(51) Int. Cl.: F04D 25/06, F04D 29/58

(54) **COMPRESSOR INCLUDING MOTOR WITH STATOR COOLING FINS AND REFRIGERATION SYSTEM INCLUDING SAME**

(30) Priority: 06.01.2025 US 202519010841
(71) Applicant: Copeland LP, Sidney, OH 45365 (US)
(72) Inventor: PEREVOZCHIKOV, Michael M., Sidney, Ohio, 45365 (US); O'MEARA, Patrick Shawn, Sidney, Ohio, 45365 (US)
(74) Representative: Maiwald GmbH

(57) **Abstract**

A compressor including a motor including a rotor and a stator including a plurality of stator teeth. Each stator tooth includes a winding tooth portion extending along and defining at least one of a winding slot and a cooling fin portion extending radially inward from the winding tooth portion. The cooling fin portion of each stator tooth is spaced circumferentially apart from the other cooling fin portions to define a plurality of cooling channels therebetween.

## Description

### FIELD

The field of the disclosure relates generally to compressors for use in refrigeration systems and, more particularly, to motors for such compressors including stator cooling fins.

### BACKGROUND

Compressors include cooling systems for providing coolant to the motor and bearings associated with the compressor driveshaft to maintain the motor and bearings within a suitable range of operating temperatures. For example, the stator may be cooled by a coolant that flows axially along a cooling conduit or tube that extends through winding slots formed between adjacent stator teeth for conveying a coolant fluid for removing heat from the stator and/or rotor. The shape and configuration of such coolant conduits can have limited ability to facilitate coolant flow through the motor.

This section is intended to introduce the reader to various aspects of art that may be related to various aspects of the disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### SUMMARY

In one aspect, a compressor includes a compressor housing, a shaft rotationally supported by at least one bearing within the compressor housing, at least one impeller operably connected to the shaft, and a motor operably connected to the shaft. The motor includes a rotor connected to the shaft, a stator including an annular hub and a plurality of stator teeth extending radially inward from the hub. The stator teeth are circumferentially spaced apart from one another to define a plurality of winding slots therebetween. The motor includes stator windings positioned within each of the winding slots and wrapped around at least one of the stator teeth. Each stator tooth includes a winding tooth portion extending along and defining at least one of the winding slots and a cooling fin portion extending radially inward from the winding tooth portion. The cooling fin portion of each stator tooth is spaced circumferentially apart from the other cooling fin portions to define a plurality of cooling channels therebetween. Each cooling channel extends a circumferential width between adjacent cooling fin portions and extends a radial length from the winding tooth portion to a distal end of the cooling fin portion. The radial length is greater than the circumferential width and each cooling channel is free of stator windings.

In another aspect, a compressor includes a compressor housing, a shaft rotationally supported by a first bearing and a second bearing within the compressor housing, a first impeller operably connected to the shaft at a first end of the shaft, a second impeller operably connected to the shaft at a second end of the shaft and a cooling channel defined by the compressor housing and connected in fluid communication with a coolant inlet passage. The cooling channel includes a first portion and a second portion such that an inlet coolant flow is split into a first coolant flow along the first portion and a second coolant flow along the second portion. The first coolant flow is delivered to the first bearing and the second coolant flow is delivered to the second bearing. The compressor including a motor operably connected to the shaft. The motor comprises a rotor connected to the shaft, a stator including an annular hub and a plurality of stator teeth extending radially inward from the hub. The stator teeth are circumferentially spaced apart from one another to define a plurality of winding slots therebetween. The motor includes stator windings positioned within each of the winding slots and wrapped around at least one of the stator teeth. Each stator tooth includes a winding tooth portion extending along and defining at least one of the winding slots and a cooling fin portion extending radially inward from the winding tooth portion. The cooling fin portion of each stator tooth is spaced circumferentially apart from the other cooling fin portions to define a plurality of stator cooling channels therebetween. Each of the stator cooling channel is free of stator windings to receive a portion of the second coolant flow after the second coolant flow is delivered to the second bearing.

In yet another aspect, a refrigeration system includes an evaporator, a condenser, an expansion device, a coolant supply line connected in fluid communication with the condenser to receive coolant therefrom and a compressor. The compressor includes a compressor housing defining a coolant inlet connected to the coolant supply line and a motor. The motor includes a stator including an annular hub and a plurality of stator teeth extending radially inward from the hub, wherein the stator teeth are circumferentially spaced apart from one another to define a plurality of winding slots therebetween and stator windings positioned within each of the winding slots and wrapped around at least one of the stator teeth. Each stator tooth includes a winding tooth portion extending along and defining at least one of the winding slots and a cooling fin portion extending radially inward from the winding tooth portion. The cooling fin portion of each stator tooth is spaced circumferentially apart from the other cooling fin portions to define a plurality of cooling channels therebetween for channeling coolant through the motor. Each cooling channel extends a radial length from the winding tooth portion to a distal end of the cooling fin portion. Each cooling channel is free of stator windings to receive coolant from the coolant supply line.

Various refinements exist of the features noted in relation to the above-mentioned aspects of the present disclosure. Further features may also be incorporated in the above-mentioned aspects of the present disclosure as well. These refinements and additional features may exist individually or in any combination. For instance, various features discussed below in relation to any of the illustrated embodiments of the present disclosure may be incorporated into any of the above-described aspects of the present disclosure, alone or in any combination.

### BRIEF DESCRIPTION OF THE DRAWINGS

Fig. 1 is a perspective view of an example compressor.

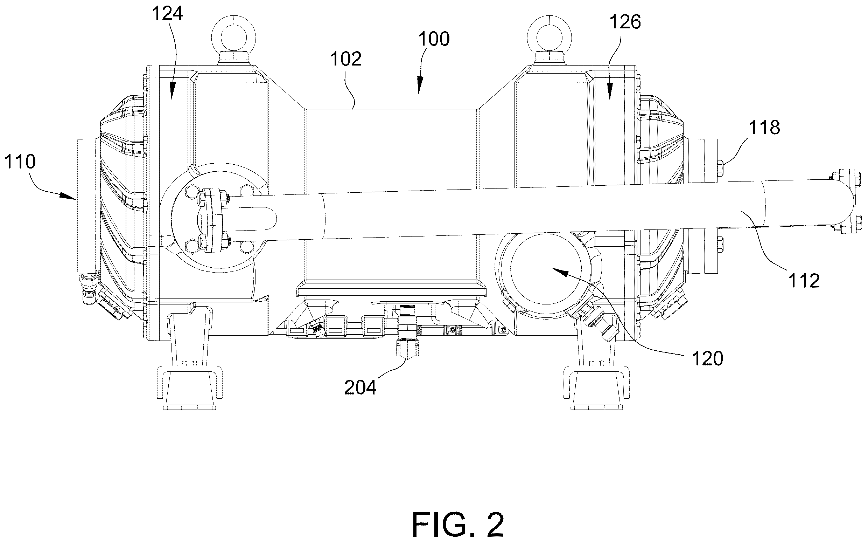

Fig. 2 is a side view of the compressor shown in Fig. 1.
Fig. 3 is a cross-sectional view of the compressor of Fig. 1 taken along line 3-3 shown in Fig. 1.
Fig. 4 is a schematic diagram of an example refrigeration system in which the compressor of Fig. 1 may be implemented.
Fig. 5 is another cross-sectional view of the compressor of Fig. 1 taken along line 5-5 shown in Fig. 1 stator.
Fig. 6 is a perspective view of a stator of the compressor shown in Fig. 5.
Fig. 7 is a cross-sectional view of the stator taken along line 7-7 shown in Fig. 6.
Fig. 8 is a perspective view of another embodiment of a stator suitable for use with the compressor of Fig. 1.

Corresponding reference characters indicate corresponding parts throughout the drawings.

### DETAILED DESCRIPTION

Embodiments of compressor motors described herein include a plurality of cooling fins that define axially extending cooling channels, free of stator windings, enabling improved flow dynamics, such as reduced turbulence, and/or increased flow rates and/or flow volume, of a coolant flow through the motor and stator. In embodiments described herein, the motor includes a rotor, a stator, and stator windings. The stator includes an annular hub and a plurality of stator teeth extending radially inward from the hub. The stator teeth are circumferentially spaced apart from one another to define a plurality of winding slots therebetween. Each of the stator teeth includes a winding tooth portion and a cooling fin portion. The winding tooth portion extends along and defines at least one of the winding slots. In embodiments described herein, the cooling fin portion extends radially inward from the winding tooth portion. The cooling fin portion of each stator tooth is spaced circumferentially apart from the other cooling fin portions to define a plurality of the cooling channels therebetween. Each cooling channel extends a circumferential width between adjacent cooling fin portions and extends a radial length from the winding tooth portion to a distal end of the cooling fin portion. In some embodiments described herein, the radial length of the cooling channel is greater than the circumferential width, and each cooling channel is free of stator windings and/or other structures such as insulation or coolant tubes, such that the plurality of axially extending cooling channels provides a radially elongate path for supplying coolant flow through the motor to cool components thereof. As such, embodiments of the motors and stators described herein provide improved cooling effects, for example, by enabling coolant flow to flow unimpeded along the axially extending, radially elongate, cooling channels positioned radially adjacent to a shaft or rotor of the compressor.

In embodiments described herein, the cooling fin portion and the winding portion are formed integrally together, e.g., such as during a stamping process. In alternative embodiments, the cooling fin portion and the winding portion are formed integrally together during a molding process, such that the teeth of the stator may be formed without significant manufacturing cost or additional assembly times. In alternative embodiments, the cooling fin portion and the winding tooth portion may be formed separately and connected together using any suitable fastener or connection methodology, e.g., welding, such that the cooling fin portions may be retrofit onto existing motor assemblies.

Example embodiments of a compressor motor and stator are described in detail herein. Aspects of the compressor motor and stator are not limited to the specific embodiments described herein, but rather, components of the compressor motor and stator may be used independently and separately from other components described herein. For example, in some embodiments, the cooling fin portion includes a shoe portion, and in other embodiments, the shoe portion may be omitted.

As used herein, the terms "about," "substantially," "essentially" and "approximately" when used in conjunction with ranges of dimensions, concentrations, temperatures or other physical or chemical properties or characteristics is meant to cover variations that may exist in the upper and/or lower limits of the ranges of the properties or characteristics, including, for example, variations resulting from rounding, measurement methodology or other statistical variation.

For conciseness, examples will be described with respect to a two-stage centrifugal compressor. However, the methods and systems described herein may be applied to other suitable compressors. The bearings, motor, and other components of a compressor may be cooled with vapor injected into a coolant path inlet, by diverting portions of a main flow of a refrigeration system to a coolant loop to be selectively provided to the coolant flow path to cool the bearings, motor, or other drive components based on the measured and desired temperatures of those components. In other embodiments, coolant flow may be introduced into the motor from any suitable source.

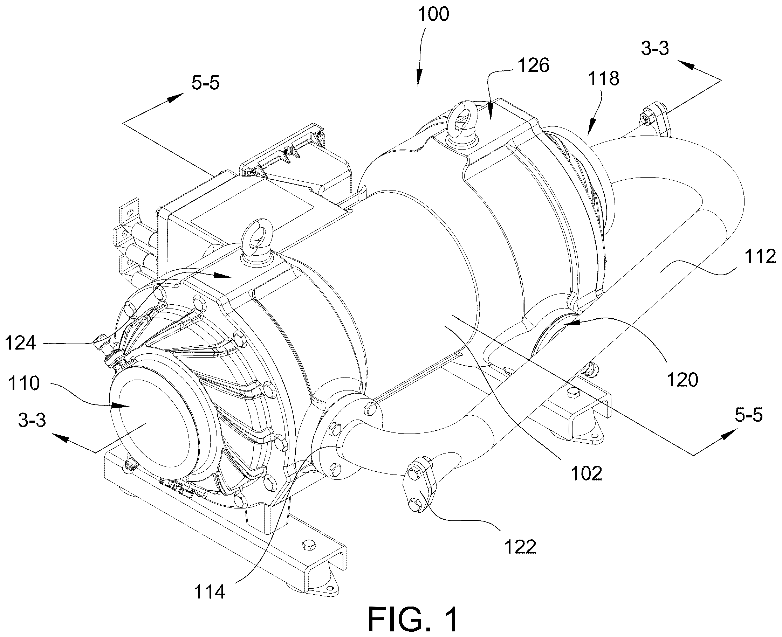

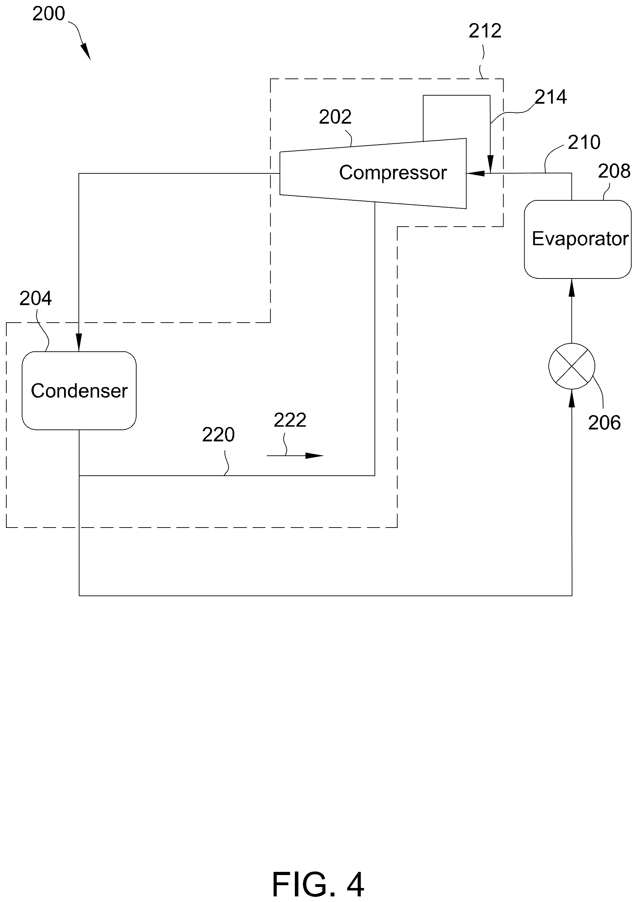

Fig. 1 is a perspective view of an example two-stage refrigerant compressor 100. The compressor 100 is operable to compress a working fluid (e.g., refrigerant), and includes a compressor housing 102 that forms at least one sealed cavity within which each stage of refrigerant compression is accomplished. The compressor 100 includes a first refrigerant inlet 110 to introduce refrigerant vapor into a first compression stage 124, a first refrigerant exit 114, a refrigerant transfer conduit 112 to transfer compressed refrigerant from the first compression stage 124 to the second compression stage 126, a second refrigerant inlet 118 to introduce refrigerant vapor into the second compression stage 126, and a second refrigerant exit 120. The refrigerant transfer conduit 112 is operatively connected at opposite ends to the first refrigerant exit 114 and the second refrigerant inlet 118, respectively. The refrigerant transfer conduit 112 further includes a port 122 for adding or removing flow between the first and second compression stages 124, 126. The second refrigerant exit 120 delivers compressed refrigerant from a second compression stage 126 to a refrigeration system 200, shown in Fig. 4, in which compressor 100 is incorporated.

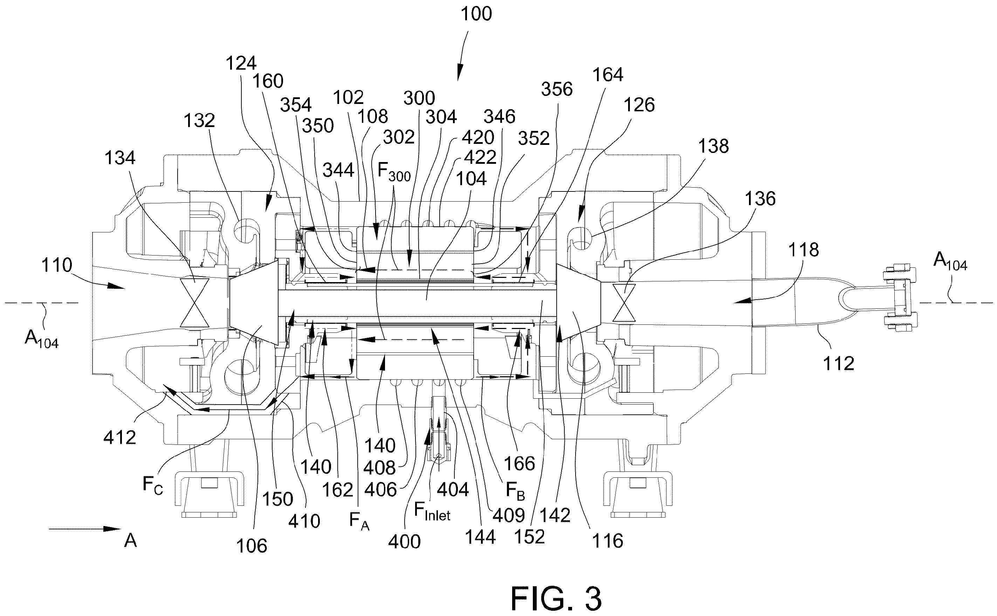

With additional reference to Fig. 3, the compressor housing 102 encloses the first compression stage 124 and the second compression stage 126 at opposite ends of the compressor 100. The first compression stage 124 includes a first impeller 106 configured to add kinetic energy to refrigerant entering via the first refrigerant inlet 110. The kinetic energy imparted to the refrigerant by the first impeller 106 is converted to increased refrigerant pressure as the refrigerant velocity is slowed upon transfer to a sealed cavity (e.g., a diffuser) formed within a volute 132. The first compression stage 124 additionally includes a first variable inlet guide vane (VIGV) 134 disposed upstream of the first impeller 106 in the first refrigerant inlet 110. The first VIGV 134 includes a plurality of vanes whose position can be controlled to introduce pre-swirl into the gaseous refrigerant entering the first refrigerant inlet 110.

Similarly, the second compression stage 126 includes a second impeller 116, configured to add kinetic energy to refrigerant transferred from the first compression stage 124 entering via the second refrigerant inlet 118. The kinetic energy imparted to the refrigerant by the second impeller 116 is converted to increased refrigerant pressure as the refrigerant velocity is slowed upon transfer to a sealed cavity (e.g., a diffuser) formed within a volute 138. Compressed refrigerant exits the second compression stage 126 via the second refrigerant exit 120.

The second compression stage 126 additionally includes a second variable inlet guide vane (VIGV) 136 disposed upstream of the second impeller 116 in the second refrigerant inlet 118. The second VIGV 136 includes a plurality of vanes whose position can be controlled to introduce pre-swirl into the gaseous refrigerant entering the second refrigerant inlet 118.

The first impeller 106 and the second impeller 116 are connected at opposite ends of a shaft 104 which includes a longitudinal axis A₁₀₄ extending between a first shaft end 140 and a second shaft end 142. The shaft 104 is operably connected to a motor 300 (e.g., via magnetic interaction between a rotor and stator 394). The motor 300 is positioned between the first impeller 106 and the second impeller 116, e.g., generally halfway between the first impeller 106 and the second impeller 116, such that the first impeller 106 and second impeller 116 are rotated at a rotation speed selected to compress the refrigerant to a pre-selected pressure exiting the second refrigerant exit 120. Generally, the motor 300 includes one or more components associated with an electrical motor (e.g., a three-phase induction motor), as described further herein. In some embodiments, the compressor 100 may include a motor temperature sensor (not shown) operable to determine a temperature of the motor 300. The motor temperature sensor may be a thermocouple, thermistor, resistance temperature detector (RTD), or any other suitable sensor.

The shaft 104 is rotatably supported by a first bearing assembly 160, associated with the first compression stage 124 and positioned within a first bearing housing 162, and a second bearing assembly 164, associated with the second compression stage 126 and positioned within a second bearing housing 166. Each of the first and second bearing housings 162, 166 includes a mounting structure for connecting the respective bearing housings to the compressor housing 102. The first and second bearing assemblies 160 and 164 rotationally support the shaft 104 at opposing ends of the shaft 104 with the motor 108 disposed between the first and second bearing assemblies 160 and 164. In some embodiments, the first bearing assembly 160 and the second bearing assembly 164 may each include radial bearings and/or thrust bearings. In some embodiments, the first bearing assembly 160 and the second bearing assembly 164 may include gas foil bearings.

Fig. 4 is a schematic diagram of an example refrigeration system 200 in which the compressor 100 of Fig. 1 can be implemented. The refrigeration system 200 includes a compressor 202, e.g., compressor 100, a condenser 204, an expansion device 206 (e.g., an expansion valve, orifice, capillary tube), and an evaporator 208. The refrigeration system 200 may include additional components or other components than those shown and described with reference to Fig. 4 without departing from the scope of the present disclosure.

In operation, the compressor 202 receives a working fluid, such as a refrigerant, as a low pressure gas through a suction line 210. The compressor 202 compresses the low pressure refrigerant gas, thereby raising the temperature and pressure of the refrigerant. The compressed, high temperature refrigerant exiting the compressor 202 is channeled towards and passes through the condenser 204, where the refrigerant is condensed to a high pressure liquid or a high pressure liquid-gas mixture. The compressed, condensed refrigerant exiting the condenser 204 is channeled towards and passes through the expansion device 206 that expands the refrigerant, thereby reducing the pressure of the refrigerant. The expanded (or "uncompressed") refrigerant exiting the expansion device 206 may be a gas or a mixture of gas and liquid after passing through the expansion device 206. The uncompressed refrigerant exiting the expansion device 206 is channeled towards and passes through the evaporator 208. The evaporator 208 may include a heat exchanger, with a relatively high temperature fluid circulating therethrough that is cooled by the uncompressed refrigerant fluid. The uncompressed refrigerant fluid evaporates to a gas in the evaporator 208. The uncompressed refrigerant gas exiting the evaporator 208 is channeled back towards the compressor 202 via the suction line 210, where the working fluid is again compressed and the process repeats.

The example refrigeration system 200 includes a compressor cooling system 212 that draws working fluid (e.g., refrigerant) from part of the main refrigeration circuit (i.e., the refrigeration loop in which the working fluid is compressed using the compressor 202, condensed using the condenser 204, expanded using the expansion device 206, and evaporated using the evaporator 208). The working fluid used in the compressor cooling system 212 is diverted from the main refrigeration circuit and channeled through a coolant supply line 220 towards the compressor 202 to cool components of the compressor 202, such as a motor and bearings of the compressor 202. The working fluid used in the compressor cooling system 212 may also be referred to herein as "coolant" or coolant 222. The coolant is returned to the refrigeration circuit by a coolant return line 214 that channels the coolant towards a low pressure line of the compressor 202 or refrigerant circuit (e.g., suction line 210). As used herein, "low pressure line" of a compressor (e.g., the compressor 202) refers to a refrigerant flow channel within the compressor or the main refrigeration circuit of which the compressor 202 is a part that precedes and channels refrigerant towards one or more impellers in the compression stages of the compressor (e.g., a first stage impeller of the compressor). The low pressure line of the compressor 202 may include, for example and without limitation, a passage extending between an inlet of a first stage of the compressor 202 and a first stage impeller, the first stage inlet of the compressor 202, and the suction line 210 connected to the first stage inlet of the compressor 202.

The coolant used in the cooling system 212 is suitably drawn from a low temperature, high pressure side of the main refrigeration circuit downstream from the condenser 204 and upstream from the expansion device 206 (i.e., from a refrigerant line connected between the condenser 204 and the expansion device 206), or, alternatively, from the condenser 204.

Drawing the coolant from the main refrigeration circuit at this stage provides several advantages. The pressure differential across a cooling circuit of the cooling system 212, i.e., the pressure differential between the high pressure refrigerant exiting the condenser 204 and the low pressure refrigerant entering the compressor 202 via the suction line 210, facilitates driving the coolant through the compressor 202, and back into the refrigeration circuit. The relatively low temperature refrigerant exiting the condenser 204, compared to a temperature of the refrigerant at downstream stages of the main refrigeration circuit (e.g., exiting the evaporator 208 and/or the expansion device 206), facilitates increasing the cooling capacity of the cooling system 212.

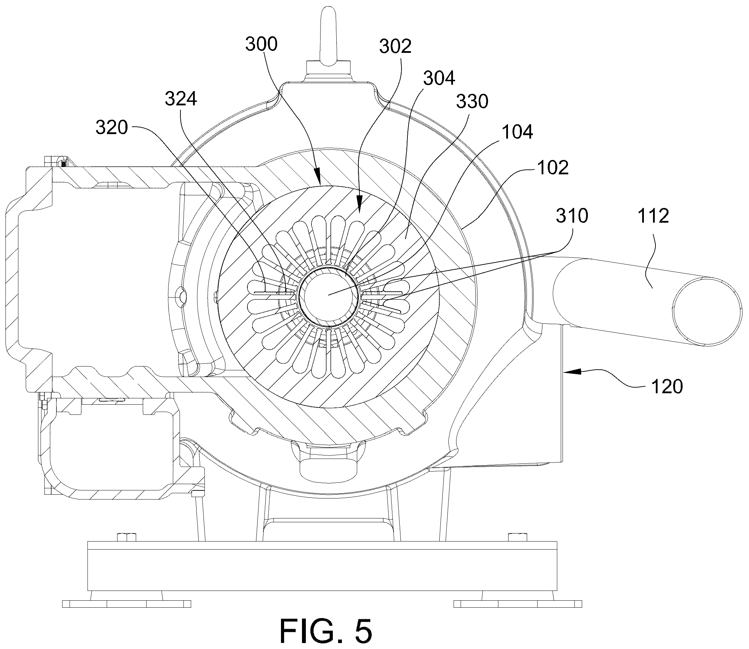

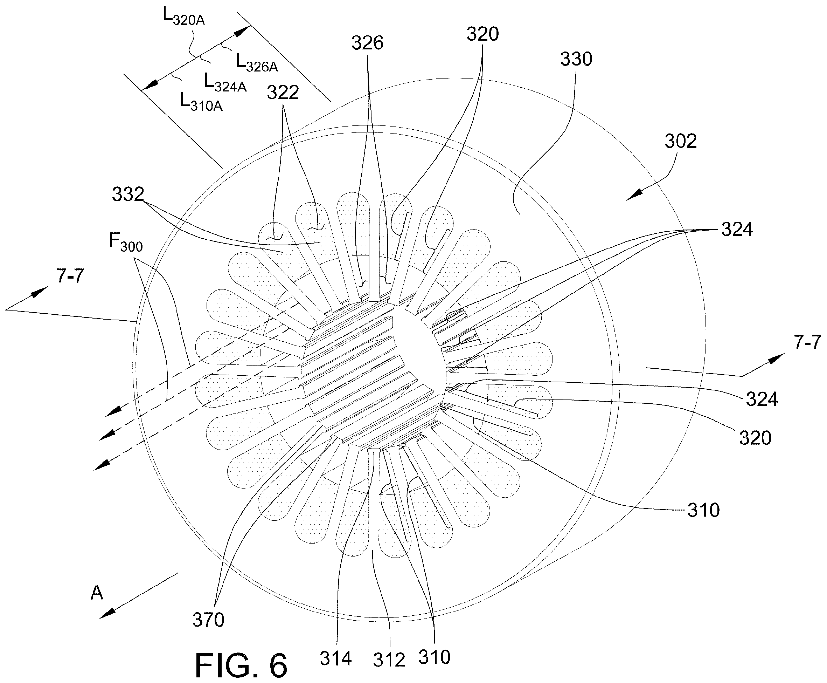

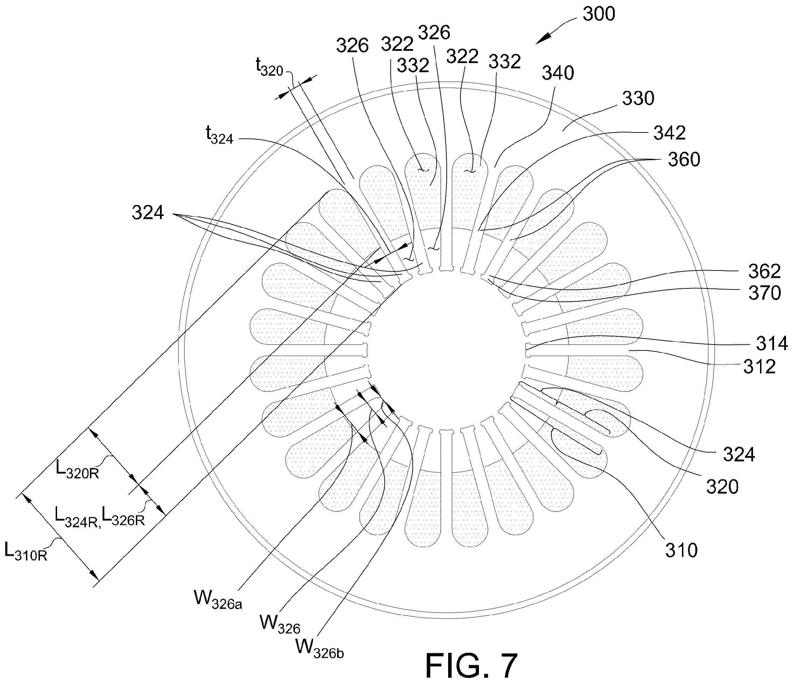

In reference to Figs. 3 and 5-8, the motor 300 includes a stator 302, a rotor 304 connected to the shaft 104, and stator windings 332 (shown in Figs. 6 and 7). The stator 302 includes an annular hub 330 and a plurality of stator teeth 310 extending radially inward from the hub 330. The stator teeth 310 are circumferentially spaced apart from one another to define a plurality of winding slots 322 therebetween. Each stator tooth 310 extends along a radial direction, perpendicular to an axial direction A that is parallel to the longitudinal axis A₁₀₄. Each stator tooth 310 extends radially between a first radial end 312 and a second radial end 314 positioned radially inward from the first radial end 312 by a radial length L_{310R} (shown in Fig. 7). Each stator tooth 310 also extends in the axial direction A, e.g., parallel to the longitudinal axis A₁₀₄ of the shaft 104, for an axial length L_{310A}. Shown in Fig. 6.

Each of the plurality of stator teeth 310 includes a winding tooth portion 320 extending along and defining at least one of the winding slots 322, and a cooling fin portion 324 extending radially inward from the winding tooth portion 320. The cooling fin portion 324 of each stator tooth 310 is spaced circumferentially apart from the cooling fin portions 324 of the other stator teeth 310 to define a plurality of cooling channels 326 therebetween. The cooling channels 326, defined by the plurality of cooling fin portions 324, provide a path for coolant flow F₃₀₀ to travel along the axial direction A, e.g., parallel to the longitudinal axis A₁₀₄ of the shaft 104, for cooling components of the motor 300 and/or components of the compressor 100. In the illustrated embodiment, the cooling channels 326 may be positioned radially adjacent to the rotor 304 or the shaft 104.

In embodiments described herein, the cooling fin portion 324 and the winding tooth portion 320 are formed integrally together, e.g., in a stamping process. In other embodiments, the cooling fin portion 324 and the winding tooth portion 320 may be formed separately and connected together using any suitable fastener or connection methodology, e.g., welding.

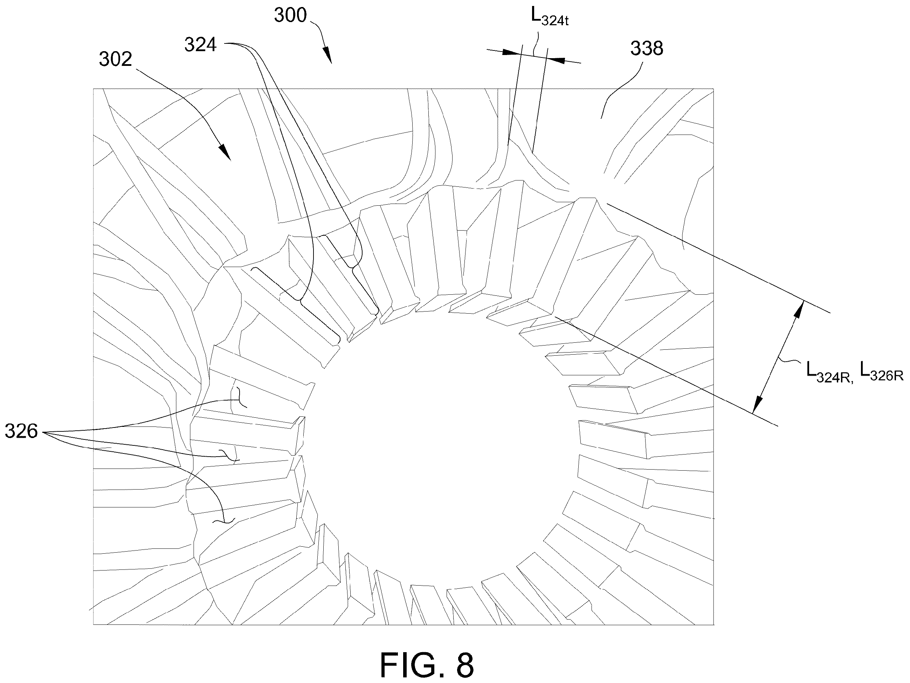

The stator windings 332 are disposed within the winding slots 322. For example, the stator windings 332 are wrapped around the winding tooth portions 320 along the axial direction A. In some embodiments, the motor 300 is a three-phase induction motor having three sets of stator windings 332. Generally, the winding 332 refers to an individual winding 332, composed of an electrically conductive wire (e.g., copper) wound around the winding tooth portion 320 for a number of turns. In some embodiments, a plurality of the stator windings 332 are disposed within a single one of the winding slots 322. In some embodiments, the motor 300 also includes insulation 338 (shown in Fig. 8) surrounding the stator windings 332.

Each of the winding tooth portions 320 includes a first radial end 340 and a second radial end 342 that is disposed radially inward from the first radial end 340. Each winding tooth portion 320 extends axially between a first axial end 346 and a second axial end 344 for an axial length L_{320A} of the winding tooth portion 320. The winding tooth portions 320 are radially spaced equidistant apart from one another such that winding slots 322 defined between adjacent winding tooth portions 320 are sized and shaped to receive the stator windings 332 therein.

In further reference to Figs. 4 and 6, the cooling fin portions 324 extend along the axial direction A between a first axial end 352 and a second axial end 350 for an axial length L_{324A}, defining an axial length L_{326A} of the cooling channels 326. The cooling fin portion 324 and the winding tooth portion 320 of each stator tooth 310 have a common axial length. For example, the axial length L_{324A} and L_{326A} is substantially the same as axial length L_{320A}, such that an axial inlet 356 and an axial outlet 354 of the cooling channels 326 is coterminous with the first and second axial ends 344, 346 of the winding tooth portions 320. The cooling fin portions 324 and the cooling channels 326 extend an entire axial length of the stator 302.

In reference to Figs. 6 and 7, the cooling fin portions 324 extend a radial length L_{324R} between a first radial end 360, that is connected to, or formed integrally with, the second radial end 342 of the winding tooth portions 320, and a second, distal, or free, radial end 362. The radial length L_{324R} of the cooling fin portions 324 may be between 5 mm and 12 mm, between 4 mm and 15 mm, or between 10 mm and 20 mm. In some embodiments, the radial length L_{324R} of the cooling fin portions 324 is greater than a radial length L_{320R} of the winding tooth portions 320.

The cooling fin portions 324 are elongate in the radial direction, in that the radial length L_{324R} is greater than a thickness t₃₂₄. In some embodiments, the cooling fin portions 324 can be relatively thin. For example, the thickness t₃₂₄ can be between 3 mm and 5 mm, between 1 mm and 8 mm, or between 2 mm and 6 mm. In some embodiments, the thickness t₃₂₄ and length L_{324R} may be scaled based on a capacity ratio of the compressor, e.g., in tons. In some embodiments, the cooling fin portions 324 may have a substantially constant thickness t₃₂₄ along the entire radial length L_{324R} of the cooling fin portion 324. In some other embodiments, the thickness t₃₂₄ of the cooling fin portions 324 may taper, from the first radial end 360 to the second radial end 362. In some embodiments, the thickness t₃₂₄ of the cooling fin portions 324 is smaller than a thickness t₃₂₀ of the winding tooth portions 320. In some embodiments, the thickness t₃₂₀ of the winding tooth portions 320 tapers and transitions gradually to the thickness t₃₂₄ of the cooling fin portions 324. For example, the thickness t₃₂₀ of the second radial end 342 of the winding tooth portions 320 can be the same as the thickness t₃₂₄ of the cooling fin portions 324. In some embodiments, the thickness t₃₂₄ of the cooling fin portion 324 is no greater than the thickness t₃₂₀ of the winding tooth portions 320.

The cooling channels 326 extend a circumferential width W₃₂₆ between adjacent cooling fin portions 324 and extend a radial length L_{326R} from the winding tooth portion 320 to the second, distal, radial end 362 of the cooling fin portion 324. In embodiments described herein, the radial length L_{326R} is greater than the circumferential width W₃₂₆. The elongate cooling channels 326 may be generally trapezoid in shape having a base circumferential width W₃₂₆ₐ that is greater than an end circumferential width W_{326b}.

As mentioned above, the cooling channels 326 are completely devoid of the stator windings 332. In the illustrated embodiment, the stator windings 332, positioned within the winding slots 322, are spaced a radial distance away from the rotor 304 and/or the shaft 104, e.g., spaced apart by the radial length L_{324R} of the cooling fin portions 324 and/or the radial length L_{326R} the cooling channels 326. In some other embodiments, the radial distance between the rotor 304 or shaft 104 and the stator windings 332 is greater than the radial length L_{324R} of the cooling fin portions 324 and/or the radial length L_{326R} of the cooling channels 326.

In some embodiments, the second radial end 362 of the cooling fin portions 324 includes a shoe 370 having a circumferential width which is greater than the thickness t₃₂₄ of the cooling fin portion 324. The shoe 370 of the cooling fin portion 324, positioned in proximity to the rotor 304 and/or the shaft 104, distributes the magnetic field over an increased area. In some embodiments, the winding tooth portions 320 may also have a shoe, not shown, to retain the stator windings 332 within the winding slots 322. In some embodiments, both the winding tooth portions 320 and the cooling fin portions 324 have a shoe.

In some embodiments, the stator teeth 310, including the winding tooth portion 320 and the cooling fin portion 324, is composed of stainless steel, silicone steel, or any other suitable material. In some embodiments, the cooling fin portions 324 are composed of the same material as the winding tooth portions 320 and/or may be formed integrally with the winding tooth portions 320. In some alternative embodiments, the cooling fin portions 324 are composed of a different material than the winding tooth portions 320.

In reference to Fig. 8, the winding tooth portions 320 and the stator windings 332 may be wrapped with the insulation 338. In embodiments described herein, the cooling channels 326 are also devoid of insulation 338. Rather, the stator windings 332, wrapped in the insulation 338, are spaced a radial distance from the rotor 304 or the shaft 104, by the elongate cooling channel 326. The insulation 338 may be any type of insulation, such as insulation cloth, and/or the insulation 338 may include an insulation resin or other suitable insulation material, e.g., polyetheretherketone (PEEK).

The motor 300 may be a component of a cooling system 400 including a coolant supply line 402 for introducing coolant flow Fᵢₙₗₑₜ into the compressor 100 from a coolant source through a coolant inlet passage 404. In the illustrated embodiment, the coolant source is working fluid, e.g., coolant 222, withdrawn from the refrigeration system 200 via the supply line 220, shown in Fig. 4. The working fluid is drawn from the refrigerant circuit downstream of the condenser 204 in the illustrated embodiment, although the working fluid may be drawn from any suitable portion of the refrigerant circuit that enables the compressor cooling system 212 to function as described herein, such as downstream of the expansion device 206 or from the evaporator 208. In alternative embodiments, the coolant source may be any suitable coolant source for supplying any suitable coolant, e.g., a coolant that is separate from the working fluid.

In reference again to Fig. 3, in some embodiments, the compressor 100 includes a cooling channel 406 defined by the compressor housing 102 that is in fluid communication with the coolant inlet passage 404 that receives the coolant flow Fᵢₙₗₑₜ supplied to the compressor 100. The cooling channel 406 includes a first portion 408 and a second portion 409 such that the coolant flow Fᵢₙₗₑₜ is split into a first coolant flow F_{A} that delivers a first amount of coolant to the first bearing assembly 160 to cool the first bearing assembly 160 and a second coolant flow F_{B} that delivers a second amount of coolant to the second bearing assembly 164 to cool the second bearing assembly 164. The cooling channel 406, including the first and second portions 408, 409 may at least partially wrap, or extends helically, around the motor 300. The cooling channel 406 is open to and in communication with the interior cavity of the compressor housing 102 and the motor 300, when installed in the compressor housing 102. Moreover, when the compressor 100 is assembled, the motor 300 forms an inner boundary 420 of the cooling channel 406. For example, an outer surface 422 of the motor 300, forms the inner boundary 420 of the cooling channels 406. The cooling channel 406 extends helically along the direction of longitudinal axis A₁₀₄ of the shaft 104 for an overall, or total, axial length that may be generally the same length as an axial length of the motor 300.

In some embodiments, the first portion 408 and the second portion 409 have the same number of turns per axial length, such that the cooling channel 402 has a uniform helical winding along the overall axial length. In some alternative embodiments, the first portion 408 and the second portion 409 have a different number of turns per axial length. For example, the first portion 408 may have a greater number of turns per axial length than the second portion 409. Alternatively, the second portion 409 may have a greater number of turns per axial length than the first portion 408.

In embodiments described herein, the coolant flow F₃₀₀ is the second coolant flow F_{B} introduced into the axial inlet 356 of the cooling channel 326, after the second coolant flow F_{B} has cooled the second bearing assembly 164. The coolant flow F₃₀₀ flows axially through the plurality of cooling channels 326 to cool components of the motor 300. The coolant flow F₃₀₀ then exits the cooling channel 326 at the axial outlets 354 where coolant flow F₃₀₀ is combined with the first coolant flow F_{A}, after the first coolant flow F_{A} has cooled the first bearing assembly 160, forming a combined flow F_{C} that is then exhausted through an exit line 410 including an outlet 412 positioned at the first compression stage 124, such that the combined flow is introduced into the first refrigerant inlet 110.

In embodiments described herein, cooling fin portions defining the plurality of axially extending cooling channels are completely free or devoid of stator windings or any other structural elements, e.g., devoid of insulation material or restrictive structures such as tubes or conduits, such that the coolant flow F₃₀₀ travels along the axial length of the cooling channels unimpeded. The cooling fin portions are elongate in the radial direction, having a radial length that is greater than their thickness and the cooling fin portions define axially extending trapezoidal shaped cooling channels having a radial length longer than a circumferential width, such that coolant flow flows axially, both in proximity to the shaft, but also in proximity to the winding tooth portions and stator windings disposed therein.

When introducing elements of the present disclosure or the embodiment(s) thereof, the articles "a," "an," "the" and "said" are intended to mean that there are one or more of the elements. The terms "comprising," "including," "containing" and "having" are intended to be inclusive and mean that there may be additional elements other than the listed elements. The use of terms indicating a particular orientation (e.g., "top," "bottom," "side", etc.) is for convenience of description and does not require any particular orientation of the item described.

As various changes could be made in the above constructions and methods without departing from the scope of the disclosure, it is intended that all matter contained in the above description and shown in the accompanying drawing[s] shall be interpreted as illustrative and not in a limiting sense.

## Claims

1. A compressor comprising:
a compressor housing;
a shaft rotationally supported by at least one bearing within the compressor housing;
at least one impeller operably connected to the shaft; and
a motor operably connected to the shaft, wherein the motor comprises:
a rotor connected to the shaft;
a stator including an annular hub and a plurality of stator teeth extending radially inward from the hub, wherein the stator teeth are circumferentially spaced apart from one another to define a plurality of winding slots therebetween; and
stator windings positioned within each of the winding slots and wrapped around at least one of the stator teeth;
wherein each stator tooth includes:
a winding tooth portion extending along and defining at least one of the winding slots; and
a cooling fin portion extending radially inward from the winding tooth portion, wherein the cooling fin portion of each stator tooth is spaced circumferentially apart from the other cooling fin portions to define a plurality of cooling channels therebetween, wherein each cooling channel extends a circumferential width between adjacent cooling fin portions and extends a radial length from the winding tooth portion to a distal end of the cooling fin portion, wherein the radial length is greater than the circumferential width, and wherein each cooling channel is free of stator windings.

2. The compressor of claim 1, wherein each cooling fin portion is elongate in the radial direction and includes a radial length that is greater than a radial thickness, wherein the radial thickness of the cooling fin portion is no greater than a thickness of each of the winding tooth portions, optionally, wherein the radial thickness of the cooling fin is between 3 and 5 mm.

3. The compressor of claim 1 or 2, wherein the cooling fin portions and the cooling channels extend an entire axial length of the stator.

4. The compressor according to any of claims 1 to 3, wherein the cooling fin portion and the winding tooth portion of each stator tooth have a common axial length such that an axial inlet of each cooling channel is coterminous with a first axial end of each winding portion and an axial outlet of each cooling channel is coterminous with a second axial end of each winding portion.

5. The compressor according to any of claims 1 to 4, wherein each cooling fin portion has a radial thickness that is substantially constant along a radial length of the cooling fin.

6. The compressor according to any of claims 1 to 5, wherein each cooling fin portion is formed integrally with the winding tooth portion.

7. The compressor according to any of claims 1 to 6, wherein each cooling fin portion includes a shoe positioned at the distal end of the cooling fin portion, wherein the shoe has a width that is greater than a thickness of the cooling fin portion.

8. The compressor according to any of claims 1 to 7, wherein the at least one bearing includes a first bearing and a second bearing, wherein the compressor further comprises a coolant flow path delivering a first amount of coolant to a first bearing assembly and a second amount of coolant to a second bearing assembly and wherein after the first amount of coolant cools the first bearing assembly, the first amount of coolant flows axially through the plurality of cooling channels.

9. A compressor comprising:
a compressor housing;
a shaft rotationally supported by a first bearing and a second bearing within the compressor housing;
a first impeller operably connected to the shaft at a first end of the shaft;
a second impeller operably connected to the shaft at a second end of the shaft;
a cooling channel defined by the compressor housing and connected in fluid communication with a coolant inlet passage, wherein the cooling channel includes a first portion and a second portion such that an inlet coolant flow is split into a first coolant flow along the first portion and a second coolant flow along the second portion, wherein the first coolant flow is delivered to the first bearing and the second coolant flow is delivered to the second bearing; and
a motor operably connected to the shaft, wherein the motor comprises:
a rotor connected to the shaft;
a stator including an annular hub and a plurality of stator teeth extending radially inward from the hub, wherein the stator teeth are circumferentially spaced apart from one another to define a plurality of winding slots therebetween; and
stator windings positioned within each of the winding slots and wrapped around at least one of the stator teeth;
wherein each stator tooth includes:
a winding tooth portion extending along and defining at least one of the winding slots; and
a cooling fin portion extending radially inward from the winding tooth portion, wherein the cooling fin portion of each stator tooth is spaced circumferentially apart from the other cooling fin portions to define a plurality of stator cooling channels therebetween, wherein each of the stator cooling channel is free of stator windings to receive a portion of the second coolant flow after the second coolant flow is delivered to the second bearing.

10. The compressor of claim 9, wherein each cooling fin portion is elongate in the radial direction and includes a radial length that is greater than a radial thickness, wherein the radial thickness of the cooling fin portion is no greater than a thickness of each of the winding tooth portions, optionally, the radial thickness of each cooling fin portion is between 3 and 5 mm.

11. The compressor of claim 9 or 10, wherein the cooling fin portion and the winding tooth portion of each stator tooth have a common axial length extending along an entire axial length of the stator, such that an axial inlet of each stator cooling channel is coterminous with a first axial end of each winding portion and an axial outlet of each stator cooling channel is coterminous with a second axial end of each winding portion.

12. The compressor according to any of claims 9 to 11, wherein each cooling fin portion has a radial thickness that is substantially constant along a radial length of the cooling fin.

13. The compressor according to any of claims 9 to 12, wherein each cooling fin portion is formed integrally with the winding tooth portion.

14. The compressor according to any of claims 9 to 13, wherein the cooling channel extends helically around the motor and wherein each of the first portion and the second portion includes a number of channel turns around the motor, and wherein the first portion includes more channel turns than the second portion.

15. A refrigeration system comprising:
an evaporator;
a condenser;
an expansion device;
a coolant supply line connected in fluid communication with the condenser to receive coolant therefrom; and
a compressor comprising:
a compressor housing defining a coolant inlet connected to the coolant supply line;
a motor comprising:
a stator including an annular hub and a plurality of stator teeth extending radially inward from the hub, wherein the stator teeth are circumferentially spaced apart from one another to define a plurality of winding slots therebetween; and
stator windings positioned within each of the winding slots and wrapped around at least one of the stator teeth;
wherein each stator tooth includes:
a winding tooth portion extending along and defining at least one of the winding slots; and
a cooling fin portion extending radially inward from the winding tooth portion, wherein the cooling fin portion of each stator tooth is spaced circumferentially apart from the other cooling fin portions to define a plurality of cooling channels therebetween for channeling coolant through the motor, wherein each cooling channel extends a radial length from the winding tooth portion to a distal end of the cooling fin portion, wherein each cooling channel is free of stator windings to receive coolant from the coolant supply line.
